# DEMANDE DE BREVET EUROPEEN

(11) **EP 0 537 131 A1**
(43) Date de publication de la demande: **14.04.1993**
(21) Numéro de dépôt: 92870162.2
(22) Date de dépôt: 06.10.1992
(51) Int. Cl.: C21B 3/06

(54) **Procédé pour conditionner la composition des scories**

(30) Priorité: 09.10.1991 BE 9100925
(71) Demandeur: COCKERILL SAMBRE, B-4100 Seraing (BE)
(72) Inventeur: Defays, Jacques, B-4121 Neuville-en-Condroz (BE)
(74) Mandataire: Vanderperre, Robert

(57) **Abrégé**

La scorie brute (1) recueillie à l'état liquide est intimement mélangée à un additif (2) au moins dans une proportion prédéterminée de manière à modifier la composition de la scorie liquide brute et produire de la scorie conditionnée liquide (3) de caractéristiques prédéterminées. La scorie conditionnée liquide (3) est alors soumise à une opération de solidification, puis la scorie solidifiée (4) est soumise à une opération de fragmentation de manière à produire des fragments (5) de scorie conditionnée qui sont alors séparés en fragments de catégories distinctes.

## Description

La présente invention se rapporte à l'industrie de production de métal (aciérie, haut-fourneau par exemple) et elle concerne en particulier un procédé pour conditionner les scories produites dans cette industrie en vue d'utilisations industrielles spécifiques.

Les scories produites lors des opérations métallurgiques constituent des matériaux intéressants pour diverses applications, par exemple dans le domaine de la construction où elles sont couramment utilisées en substitution aux graves naturelles. Cependant, la composition des scories varie en fonction du procédé métallurgique qui les produisent et cette composition n'est pas toujours exactement celle que l'on souhaiterait dans une application particulière. C'est ainsi que dans le domaine de la construction, la présence de chaux libre dans les scories utilisées constitue un risque important de gonflement par hydratation ultérieure de cette chaux.

Pour éviter ce problème, on laisse habituellement vieillir les scories durant plusieurs mois avant de les utiliser. A cet effet, les scories solidifiées et broyées sont mises en tas et on les laisse reposer avec arrosage naturel ou artificiel. Cette méthode est longue, peu commode, d'un contrôle délicat et il n'est guère facile d'en garantir un résultat parfait.

En fait, les scories sont des produits résiduels des procédés métallurgiques dans les aciéries et hauts-fourneaux et ces procédés ne sont guère adaptés pour optimiser à la fois les qualités des métaux qu'ils sont destinés à produire à titre principal et la composition des scories, produit résiduel, en fonction de chaque application envisagée pour ces scories. De façon générale le traitement des scories n'a point connu de développement technologique comparable à d'autres procédés industriels.

Le but de la présente invention est de remédier à cette lacune en proposant un procédé de traitement des scories encore à l'état liquide directement en fin du procédé métallurgique afin de conditionner les scories de manière sélective en vue d'applications particulières.

Le procédé suivant l'invention est défini dans les revendications. La scorie brute recueillie à l'état liquide est intimement mélangée à un additif au moins dans une proportion prédéterminée de manière à modifier la composition de la scorie liquide brute et produire de la scorie conditionnée liquide de caractéristiques prédéterminées. La scorie conditionnée liquide est alors soumise à une opération de solidification, puis la scorie solidifiée est soumise à une opération de fragmentation de manière à produire des fragments de scorie conditionnée qui sont alors séparés en fragments de catégories distinctes.

Dans un mode de réalisation particulier, l'additif mélangé à la scorie liquide brute est constitué d'une matière zincifère, par exemple des mitrailles zinguées. De manière très avantageuse, il est ainsi possible de recueillir par évaporation une phase plus riche en zinc que la matière zincifère de départ.

Le conditionnement des scories conformément à l'invention a non seulement pour avantage d'adapter au choix la composition des scories, et notamment d'abaisser la teneur en chaux libre, mais elle permet également très avantageusement de valoriser et recycler d'autres produits résiduels de l'industrie métallurgique.

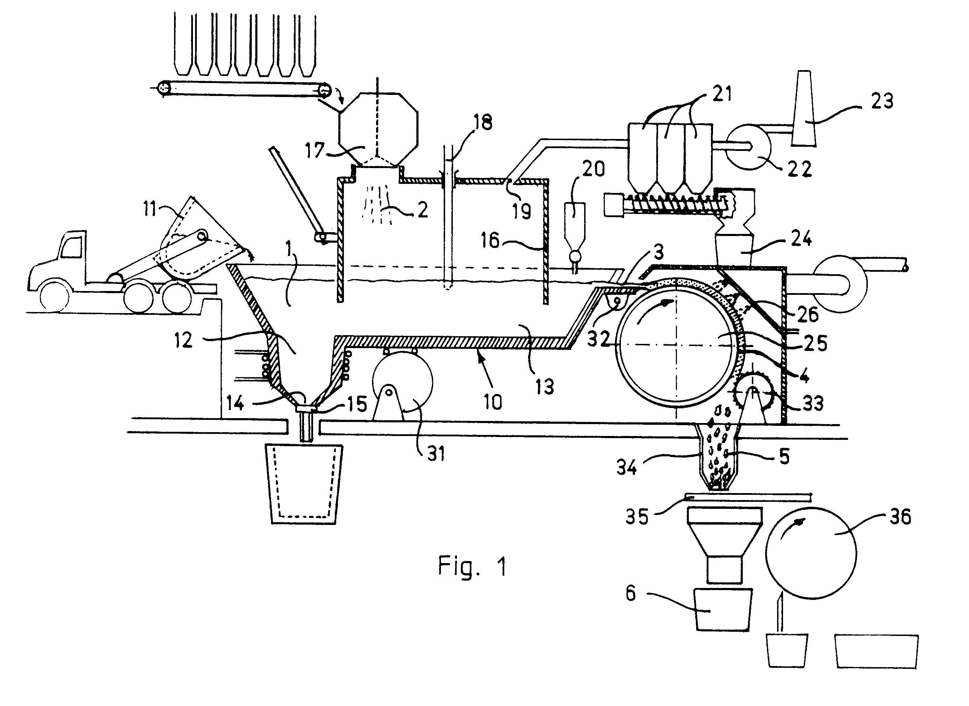

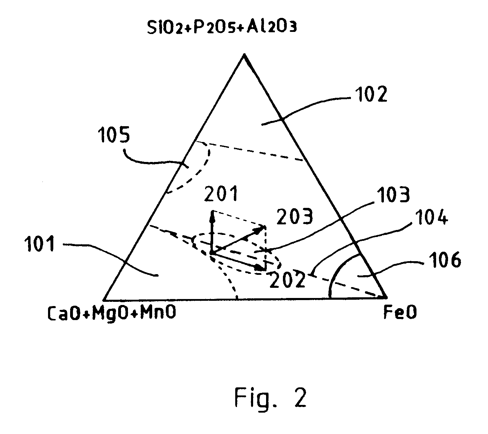

Le procédé selon l'invention est décrit plus en détails ci-après à l'aide des dessins joints. La figure 1 représente schématiquement une installation exemplaire permettant la mise en oeuvre du procédé La figure 2 est un diagramme du système ternaire FeO-CaO-SiO₂ servant à expliquer l'invention.

Sur la figure 1 est représenté en 11 un conteneur dans lequel est recueillie de la scorie liquide brute 1 provenant du décrassage des bains ou restant après coulée et provenant d'une installation métallurgique, par exemple une aciérie. La scorie liquide brute 1 est déversée dans un bac basculant 10. Le bac 10 comporte un premier compartiment 12 dans le fond duquel, par décantation, est recueilli le métal (par exemple l'acier) qui, après coulée, accompagne la scorie liquide contenue dans le récipient de coulée. Ce compartiment 12 comporte de préférence un dispositif de chauffage destiné à maintenir le métal recueilli à l'état liquide. Le fond du compartiment 12 présente un orifice 14 muni d'un dispositif d'obturation 15 permettant la coulée périodique du métal liquide récupéré.

Un second compartiment 13 du bac 10 est surmonté d'une enceinte fermée 16. Elle est conçue et disposée de manière à plonger dans le bain de scorie liquide brute sans toucher le fond du bac et de manière à permettre le passage de la scorie liquide dans le fond du bac. L'enceinte 16 est pourvue d'un dispositif d'amenée 17 pour l'introduction d'un ou plusieurs additifs 2 choisis en fonction de l'application prévue pour la scorie comme il sera expliqué plus loin.

A l'intérieur de l'enceinte 16 est également prévu un moyen pour brasser ou agiter la scorie liquide 1 additionnée du où des additifs 2 afin de favoriser la réaction chimique entre les constituants de la scorie 1 et les additifs 2. Le moyen pour brasser ou agiter le bain de scorie peut par exemple consister en une lance de soufflage 18, en tuyères ou encore en briques poreuses montées de manière à pouvoir insuffler un gaz de brassage (par exemple de l'air) dans le bain. En lieu et place d'un dispositif de soufflage on peut aussi par exemple prévoir un dispositif d'agitation mécanique.

Enfin, l'enceinte 16 est équipée d'un orifice 19 pour l'évacuation des fumées et gaz; à l'orifice 19 sont raccordés des moyens d'extraction et de dépoussiérage (connus en soi) comme par exemple un filtre dépoussiéreur 21, un ventilateur 22, une cheminée d'évacuation 21, une benne à poussier 24.

Dans le compartiment 13 la scorie brassée se trouve conditionnée grâce aux additifs 2 et la scorie liquide conditionnée 3 est prête pour être solidifiée. La scorie liquide conditionnée 3 est déversée du bac 10 sur un dispositif de solidification 25. Vu le cycle discontinu de déversement de la scorie et afin de permettre un déversement continu de la scorie liquide conditionnée 3, il convient de régler le niveau du bain liquide par rapport au dispositif de solidification, par exemple en faisant basculer le bac 10 autour d'un axe horizontal. Sur la figure 1 est représenté un excentrique 31 agencé pour faire pivoter le bac 10 autour d'un axe de pivotement horizontal 32 et assurer ainsi le débit continu de ladite scorie.

Le dispositif de solidification 25 est par exemple constitué d'un cylindre métallique refroidi intérieurement par un fluide et disposé de manière à recevoir et entraîner la scorie liquide conditionnée 3. Au cylindre 25 peut éventuellement être associé un moyen pour asperger la surface du cylindre 25 d'un liquide de refroidissement afin d'accélérer la solidification. Un tel moyen est représenté schématiquement en 26. Durant son passage sur le cylindre de solidification 25 la scorie conditionnée 3 se solidifie, puis la couche de scorie solidifiée 4 se trouve fragmentée par un moyen connu quelconque représenté schématiquement par un cylindre hérisson 33. Les fragments 5 de scorie conditionnée sont recueillis dans une trémie 34. Ensuite, ces fragments 5 passent sur un crible vibrant 35 afin d'en séparer les fines 6 puis ils sont distribués sur la surface d'un tambour séparateur 36, par exemple un séparateur magnétique destiné à séparer les matières métalliques qui peuvent alors être recyclées, par exemple, vers l'aciérie. Les fines 6 qui traversent le crible vibrant 35 sont recueillies pour être utilisées par l'intermédiaire d'un dispositif 20, pour réguler la température de la scorie avant son déversement sur le cylindre de solidification 25.

Revenons maintenant à l'ajustement ou conditionnement de la scorie liquide effectué dans l'enceinte 16 formée dans le bac 10. Les additifs 2 introduits pour être mélangés intimement à la scorie liquide brute 1 sont par exemple des porteurs d'oxyde de fer tels que des boues d'aciérie et des porteurs de silice tels que du laitier de haut-fourneau. Le choix des additifs et leur quantité détermine la composition finale de la scorie et la nouvelle composition de la scorie peut ainsi être choisie de façon sélective en fonction de l'application envisagée.

A titre d'exemple, prenons le cas de scories d'aciérie dont une composition typique est :

| | |
|---|---|
| CaO | 45 % |
| SiO₂ | 15 % |
| FeO | 24 % |
| MgO | 8 % |
| MnO | 3 % |
| Al₂O₃ | 2 % |
| P₂O₅ | 3 % |

Considérons le diagramme du système ternaire FeO-CaO-SiO₂ montré à la figure 2, sur lequel on a regroupé les composants CaO+MgO+MnO; SiO₂+P₂O₅+Al₂O₃; FeO. Sur ce diagramme, la zone notée 101 est la zone de saturation en chaux, la zone notée 102 est la zone de saturation en silice, et la zone notée 103 est la zone de composition des scories d'aciérie LD . Ainsi qu'il est bien connu de l'homme du métier, la zone 103 est habituellement située sur la ligne de crête des activités de FeO, notée 104, en une position la plus éloignée possible du sommet FeO et proche de la zone de saturation en chaux 101.

Comme expliqué plus haut, les scories produites habituellement par les aciéries, qui ont une composition comprise dans la zone 103, contiennent trop de chaux libre pour pouvoir être utilisées comme telles dans le domaine de la construction . Conformément à l'invention, les scories d'aciérie peuvent être conditionnées pour pouvoir être utilisées en construction par l'ajout d'un additif tel que du laitier de haut-fourneau ou des boues de dépoussiérage d'aciérie ou de haut-fourneau. Sur le diagramme de la figure 2, la zone notée 105 représente la zone de composition de laitier de haut-fourneau tandis que la zone notée 106 représente la zone de composition de boues de dépoussiérage. L'homme du métier peut se rendre compte que l'ajout d'une quantité appropriée de laitier de haut-fourneau déplacera la zone de composition de la scorie d'aciérie vers la zone 105 (vecteur 201). L'ajout de boues de dépoussiérage aura jour effet de déplacer la zone de composition de la scorie 103 vers la zone 106 (vecteur 202). L'ajout à la fois de laitier de haut-fourneau et de boues de dépoussiérage aura pour effet de déplacer la zone 103 suivant le vecteur 203. La longueur des vecteurs 201, 202 et 203 est proportionnelle à la quantité de l'ajout. On voit ainsi que les scories brutes peuvent être aisément conditionnées sélectivement en vue de telle ou telle application spécifique.

Il est bien entendu que les ajouts, qui peuvent être solides, liquides ou gazeux, effectués conformément à l'invention, ne sont point limités à l'utilisation de laitier de haut-fourneau et de boues de dépoussiérage d'aciérie ou de haut-fourneau. On peut encore mentionner par exemple des fines de chaux, de la dolomie pour l'utilisation en cimenterie, des mitrailles éventuellement zinguées pour l'utilisation en aciérie, etc.

On notera que dans le cas où l'on introduit des matières zincifères, la majeure partie du zinc s'évapore et est collectée en 24 sous forme d'oxyde, qui est recueilli dans le système de dépoussiérage des fumées 21. Ceci peut constituer une technique avantageuse de séparation du zinc car dans le système 21 on recueille une phase plus riche en zinc que la matière zincifère de départ.

Outre l'avantage principal de réaliser un conditionnement sélectif des scories, l'invention a également pour avantage de permettre de revaloriser des produits résiduels industriels.

## Revendications

1. Dans un processus industriel de production de métal produisant notamment de la scorie liquide, un procédé pour conditionner la composition de la scorie, caractérisé par les étapes suivantes :
a) la scorie brute (1) est recueillie à l'état liquide,
b) la scorie liquide (1) est intimement mélangée à un additif (2) au moins dans une proportion prédéterminée de manière à modifier la composition de la scorie liquide brute (1) et produire de la scorie conditionnée liquide (3) de caractéristiques prédéterminées,
c) la scorie conditionnée liquide (3) est soumise à une opération de solidification,
d) la scorie conditionnée solidifiée (4) est soumise à une opération de fragmentation de manière à produire des fragments (5) de scorie conditionnée,
e) les fragments (5) de la scorie conditionnée sont séparés en fragments de catégories distinctes.

2. Procédé selon la revendication 1, caractérisé en ce que le mélange intime de scorie liquide (1) et d'additif(s) (2) s'effectue par brassage du bain au moyen d'un gaz insufflé dans ledit bain.

3. Procédé selon la revendication 1, caractérisé en ce que le mélange intime de scorie liquide (1) et d'additif(s) (2) s'effectue par agitation mécanique.

4. Procédé selon la revendication 1, 2 ou 3, caractérisé en ce que la solidification de la scorie conditionnée (3) s'effectue par contact avec la surface d'un cylindre métallique refroidi intérieurement par un fluide de refroidissement.

5. Procédé selon la revendication 1, 2, 3 ou 4, caractérisé en ce que la solidification peut être accélérée par un arrosage direct au moyen d'un fluide de refroidissement.

6. Procédé selon l'une quelconque des revendications précédentes, caractérisé en ce que la séparation des fragments (5) de scorie conditionnée est effectuée au moyen d'un séparateur magnétique.

7. Procédé selon l'une quelconque des revendications précédentes, caractérisé en ce que l'additif (2) est du laitier de haut-fourneau.

8. Procédé selon l'une quelconque des revendications précédentes, caractérisé en ce que l'additif (2) est constitué de poussier ou de boues de dépoussiérage.

9. Procédé selon l'une quelconque des revendications précédentes, caractérisé en ce que l'additif (2) est constitué de matières zincifères, en particulier des mitrailles zinguées.

10. Procédé selon l'une quelconque des revendications précédentes, caractérisé en ce que l'additif (2) est constitué de fines de chaux ou de dolomie.

11. Dispositif pour conditionner de la scorie liquide brute (1), caractérisé en ce qu'il comprend un bac (10) pour recevoir la scorie liquide brute (1), et une enceinte fermée (16) plongeant dans le bain de scorie liquide brute sans toucher le fond du bac, l'enceinte (16) étant percée d'une ouverture pour l'introduction d'un additif prédéterminé (2) au moins et un moyen agencé à l'intérieur de l'enceinte (16) précitée de manière à brasser le bain de scorie liquide additionné du ou des additifs prédéterminés.

12. Dispositif selon la revendication 10, caractérisé en ce qu'il comporte un dispositif pour faire basculer le bac (10) autour d'un axe horizontal (32).

13. Dispositif selon la revendication 10, caractérisé en ce qu'il est muni d'un dispositif 20 pour additionner des fines de retour permettant la régulation de la température de la scories avant son déversement sur le cylindre de solidification (25).
